# EUROPÄISCHE PATENTANMELDUNG

(11) **EP 3 940 921 A1**
(43) Veröffentlichungstag der Anmeldung: **19.01.2022**
(21) Anmeldenummer: 20185484.1
(22) Anmeldetag: 13.07.2020
(51) Int. Cl.: H02J 50/10, H02J 50/40, H02J 50/80

(54) **SENDEEINHEIT, ENERGIEÜBERTRAGUNGSMODUL, ENERGIEÜBERTRAGUNGSSYSTEM UND ENERGIE-SENDE- UND EMPFANGSEINHEIT**

(71) Anmelder: Hilti Aktiengesellschaft, 9494 Schaan (LI)
(72) Erfinder: Schaer, Roland, 9472 Grabs (CH); Hornscheidt-Schrittwieser, Lukas, 8952 Schlieren (CH); Mugioiu, Dan, 8952 Schlieren (CH); Wegmann, Markus, 8952 Schlieren (CH); Hüsser, Noah, 8952 Schlieren (CH)
(74) Vertreter: Hilti Aktiengesellschaft Corporate Intellectual Property

(57) **Zusammenfassung**

Die Erfindung beschreibt eine Sendeeinheit (16) zur Energieübertragung zu einem Mobilgerät (12) zur Versorgung des Mobilgeräts (12), insbesondere einer Handwerkzeugmaschine, mit zum Betrieb des Mobilgeräts (12) erforderlicher Energie, wobei die Energieübertragung drahtlos erfolgt, umfassend eine Energieübertragungsfläche (26) zur drahtlosen Energieübertragung zu dem Mobilgerät (12), und eine Kommunikationsschnittstelle (18), die eingerichtet ist, mit einer weiteren, gleichartigen Sendeeinheit (16) zu kommunizieren. Des Weiteren betrifft die Erfindung ein Energieübertragungsmodul (14), ein Energieübertragungssystem (10) sowie eine Energie-Sende- und Empfangseinheit (32). Die Erfindung ermöglicht eine besonders komfortable Energieübertragung zu einer Vielzahl von Mobilgeräten (12), um beispielsweise Energiespeicher dieser Mobilgeräte (12) aufzuladen.

## Beschreibung

Die vorliegende Erfindung betrifft eine Sendeeinheit zur Energieübertragung zu einem Mobilgerät, insbesondere einer Handwerkzeugmaschine, zur Versorgung des Mobilgeräts mit zum Betrieb des Mobilgeräts erforderlicher Energie, wobei die Energieübertragung drahtlos erfolgt, umfassend wenigstens eine Energieübertragungsfläche zur drahtlosen Energieübertragung zu dem Mobilgerät.

Die Inhalte der Beschreibung, der Ansprüche und der Zeichnung der beim Europäischen Patentamt eingereichten europäischen Patentanmeldung mit Aktenzeichen EP20185450 vom 13.07.2020 bilden im Wege der ausdrücklichen Bezugnahme einen Teil dieser Beschreibung.

Um ein Mobilgerät, beispielsweise eine akkubetriebene Handwerkzeugmaschine, betreiben zu können, ist es in der Regel erforderlich, einen Energiespeicher, insbesondere einen Akku, des Mobilgeräts vorab aufzuladen. Dies erfolgt üblicherweise mittels eines speziell auf das Mobilgerät abgestimmten Energieübertragungssystems, beispielsweise eines Ladegeräts, mit dem das Mobilgerät zur Aufladung gekoppelt wird.

Häufig verwendet ein Benutzer mehrere Mobilgeräte gleichzeitig. Damit sind auch oftmals mehrere Energiespeicher der verwendeten Mobilgeräte gleichzeitig oder zumindest zeitlich überlappend aufzuladen. Bislang benötigte der Benutzer daher in der Regel mehrere Energieübertragungssysteme. Deren Energieversorgung wiederum erfolgt oftmals mittels Anschluss an das lokale Stromnetz. Eine Verwendung einer Vielzahl von Energieübertragungssystemen führt daher regelmäßig zu einem unerwünschten Mehraufwand durch den Aufbau und die Inbetriebnahme der Energieübertragungssysteme. Ferner müssen die Mobilgeräte mit einer verhältnismäßig hohen Genauigkeit auf vorgegebenen Positionen platziert und ausgerichtet werden, um eine hinreichende Energieübertragung zum jeweiligen Mobilgerät gewährleisten zu können und, insbesondere im Falle drahtloser Energieübertragungssysteme, um Störabstrahlungen der Energieübertragungssysteme zu vermeiden.

Aufgabe der vorliegenden Erfindung ist es daher, wenigstens eine Vorrichtung anzubieten, durch die einem Benutzer eine besonders komfortable und ordnungsgemäße Energieübertragung zu einem oder mehreren Mobilgeräten ermöglicht wird.

Gelöst wird die Aufgabe durch eine Sendeeinheit zur Energieübertragung zu einem Mobilgerät zur Versorgung des Mobilgeräts, insbesondere einer Handwerkzeugmaschine, mit zum Betrieb des Mobilgeräts erforderlicher Energie, wobei die Energieübertragung drahtlos erfolgt, umfassend eine Energieübertragungsfläche zur drahtlosen Energieübertragung zu dem Mobilgerät und eine Kommunikationsschnittstelle, die eingerichtet ist, mit einer weiteren, gleichartigen Sendeeinheit zu kommunizieren.

Somit liegt der Erfindung der Gedanke zugrunde, Sendeeinheiten, insbesondere als Teil eines Energieübertragungssystems anzubieten, die, jede für sich, mittels ihrer Energieübertragungsfläche Energie zu einem Mobilgerät übertragen und zumindest untereinander kommunizieren können. Somit können die Sendeeinheiten untereinander Informationen beispielsweise über für Energieübertragungen notwendige Parameter austauschen. Weisen die Sendeeinheiten ein oder mehrere Sendespulen zur Energieübertragung über die Energieübertragungsflächen auf, können Synchronisierungsinformationen zur Synchronisierung des Betriebs der Sendespulen verschiedener Sendeeinheiten ausgetauscht werden. Ein unnötiger Betrieb einer oder mehrerer Sendespulen und damit unerwünschte Störabstrahlen lassen sich somit vermeiden. Der Komfort lässt sich ferner steigern, da selbst bei ungenauer Platzierung des Mobilgeräts, beispielsweise im Falle einer Platzierung des Mobilgeräts über mehrere Sendeeinheiten hinweg, Energie mit hoher Leistung auf das Mobilgerät übertragbar ist.

Durch Aneinanderreihung mehrerer Sendeeinheiten lässt sich auch eine besonders große Gesamtenergieübertragungsfläche aus den einzelnen Energieübertragungsflächen der einzelnen Sendeeinheiten bilden. Werden die Sendeeinheiten derart aneinandergereiht vormontiert, so lassen sich Rüstzeiten vor Ort zum Aufbau der für eine Vielzahl von Mobilgeräten benötigten Sendeeinheiten oder Energieübertragungssysteme erheblich verkürzen.

Dabei kann unter einer gleichartigen Sendeeinheit eine identisch aufgebaute Sendeeinheit verstanden werden. Alternativ oder ergänzend kann unter "gleichartig" auch eine Sendeeinheit subsumiert werden, die prinzipiell strukturell identisch aufgebaut ist. Insbesondere ist es denkbar, darunter auch eine Sendeeinheit zu verstehen, die zwar eine von einer ersten Sendeeinheit abweichende Anzahl von Sendespulen aufweist, jedoch alle Sendespulen nach demselben elektrotechnischen Grundprinzip, beispielsweise einem Prinzip eines Betriebs mit phasensynchronisierten Spulenströmen, verschaltet sind.

Die Kommunikationsschnittstelle kann als drahtlose Schnittstelle eingerichtet sein. Alternativ oder ergänzend kann sie auch als drahtgebundene Schnittstelle ausgebildet sein.

Die Sendeeinheit kann zur Energieübertragung mit besonders hohen Leistungen, beispielsweise mindestens 10 W, vorzugsweise mindestens 100 W, eingerichtet sein. Sie kann ferner eingerichtet sein, höchstens 5 kW, insbesondere höchstens 2 kW, zu übertragen. Sie kann insbesondere eingerichtet sein, Energie zu einer elektrischen Handwerkzeugmaschine und/oder auf einen elektrischen Energiespeicher einer solchen elektrischen Handwerkzeugmaschine zu übertragen.

Die Sendeeinheit kann eine Energieversorgungsschnittstelle oder mehrere Energieversorgungsschnittstellen zum uni- oder bidirektionalen Austausch der zum Betrieb wenigstens einer der Sendeeinheiten notwendigen elektrischen Energie mit der weiteren Sendeeinheit aufweisen. Somit kann die Sendeeinheit von der weiteren Sendeeinheit mit Energie versorgt werden oder sie kann die weitere Sendeeinheit mit Energie versorgen. Somit kann eine mit einer der Sendeeinheit verbundenen elektrischen Energiequelle genügen, um wenigstens zwei, allgemein mehrere, Sendeeinheiten mit Energie zu versorgen.

Vorzugsweise weist die Sendeeinheit wenigstens zwei Energieversorgungsschnittstellen auf. Diese können an verschiedenen Seiten der Sendeeinheit angeordnet und/oder ausgebildet sein. Somit lassen sich Sendeeinheiten horizontal und/oder vertikal aneinanderreihen. Wenigstens eine der Sendeeinheiten kann von einer benachbarten Sendeeinheit mit Energie versorgt werden. Diese Sendeeinheit kann auch eine andere benachbarte Sendeeinheit mit Energie versorgen.

Vorzugsweise kann die Kommunikationsschnittstelle wenigstens eine der Energieversorgungsschnittstellen bilden, sodass mittels der Kommunikationsschnittstelle sowohl Informationen als auch zum Betrieb einer Sendeeinheit notwendige Energie zu der weiteren Sendeeinheit übertragen oder von dieser bezogen werden kann. Ist die Kommunikationsschnittstelle drahtlos ausgebildet, so kann sie ausgebildet sein, sowohl die Information als auch die Energie induktiv zu übertragen. Bei einer drahtgebundenen Kommunikationsschnittstelle können die Informationen als auch die Energie über ein gemeinsames Kabel übertragbar sein.

Zur Übertragung von Synchronisationsinformationen kann die Kommunikationsschnittstelle eingerichtet sein, dass wenigstens eine Information über eine Soll-Phasenlage des in einer Sendespule der Sendeeinheit fließenden Stroms oder über einen relativen Soll-Phasenwinkel übertragbar ist.

Bei besonders bevorzugten Ausführungsformen ist vorgesehen, dass wenigstens zwei Sendespulen derart betrieben, insbesondere angesteuert, werden, dass die durch diese fließenden Ströme einen im Betrag begrenzten relativen Phasenwinkel aufweisen. Insbesondere kann der relative Phasenwinkel höchstens 45°, besonders bevorzugt höchstens 15° betragen. Äußerst bevorzugt sind die Ströme der wenigstens zwei Sendespulen zueinander phasengleich oder zumindest im Wesentlichen phasengleich. Ein Verfahren zur Steuerung der Sendespulen kann daher eingerichtet sein, den relativen Phasenwinkel zu minimieren. Die wenigstens zwei Sendespulen können zur selben Sendeeinheit oder zu verschiedenen Sendeeinheiten gehören. Insbesondere in letzterem Fall kann die Steuerung des relativen Phasenwinkels unter Zuhilfenahme der über die Kommunikationsschnittstelle übertragbaren Synchronisationsinformationen erfolgen.

Bei einer besonders vorteilhaften Klasse von Ausführungsformen der Erfindung ist die Sendeeinheit mit der weiteren Sendeeinheit kraft- und/oder formschlüssig verbindbar, sodass sich mehrere Sendeeinheiten besonders einfach aneinanderreihen lassen. Der Kraft- und/oder der Formschluss können an einer oder mehreren Seiten der Sendeeinheit ausbildbar sein. Die Sendeeinheit kann dazu einen Rastmechanismus aufweisen. Alternativ oder ergänzend kann sie auch magnetische, insbesondere permanentmagnetische, Bereiche aufweisen. Besonders bevorzugt können die Sendeeinheit und die weitere Sendeeinheit werkzeuglos miteinander verbindbar sein.

Die Aufgabe wird auch durch ein Energieübertragungsmodul zur Energieübertragung zu einem Mobilgerät zur Versorgung mit zum Betrieb des Mobilgeräts (12) erforderlicher Energie, insbesondere einer Handwerkzeugmaschine, gelöst, bei dem die Energieübertragung drahtlos erfolgt und das eine erfindungsgemäße Sendeeinheit und eine elektrische Energiequelle umfasst. Das Energieübertragungsmodul kann also eine spezielle Sendeeinheit sein, die eine Energiequelle aufweist. Denkbar ist somit, dass die Energieversorgung des Energieübertragungsmoduls und/oder weiterer Sendeeinheiten durch diese elektrische Energiequelle erfolgt.

Die elektrische Energiequelle kann vorzugsweise einen Netzstromeingang oder einen wiederaufladbaren oder einen nicht wiederaufladbaren Energiespeicher aufweisen. Insbesondere kann die elektrische Energiequelle einen Akku oder eine Brennstoffzelle aufweisen.

Des Weiteren fällt ein Energieübertragungssystem in den Rahmen der Erfindung, das ein erfindungsgemäßes Energieübertragungsmodul und eine erfindungsgemäße Sendeeinheit umfasst und somit von Haus aus eine besonders große Gesamtenergieübertragungsfläche zur Verfügung stellen kann.

Die Erfindung stellt auch eine Energie-Sende- und Empfangseinheit bereit, die eine erfindungsgemäße Sendeeinheit und ein Mobilgerät, das eingerichtet ist, Energie drahtlos von der Sendeeinheit zu empfangen, umfasst. Denkbar ist dabei, dass die Sendeeinheit als Energieübertragungsmodul ausgebildet ist.

Die Sendeeinheit kann wenigstens zwei Sendespulen aufweisen. Diese können eingerichtet sein, über die Energieübertragungsfläche der Sendeeinheit Energie zu übertragen. Das Mobilgerät kann wenigstens eine Empfangsspule aufweisen. Dabei kann die Empfangsspule größer als wenigstens eine der Sendespulen sein. Die Empfangsspule kann somit mehrere der Sendespulen überspannen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, aus den Ansprüchen sowie aus der Beschreibung und den Figuren der Zeichnung der durch Bezugnahme mit eingebundenen, eingangs genannten europäischen Patentanmeldung.

Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- **Fig. 1**: eine Energie-Sende- und Empfangseinheit in schematischer Darstellung und
- **Fig. 2**: eine weitere Energie-Sende- und Empfangseinheit in schematischer Darstellung.

In der nachfolgenden Beschreibung der Figuren werden zur Erleichterung des Verständnisses der Erfindung für gleiche oder sich funktional entsprechende Elemente jeweils die gleichen Bezugszeichen verwendet. Zudem werden, soweit möglich, die in der oben genannten, durch Bezugnahme eingebundenen, europäischen Patentanmeldung verwendeten Bezugszeichen weiterverwendet.

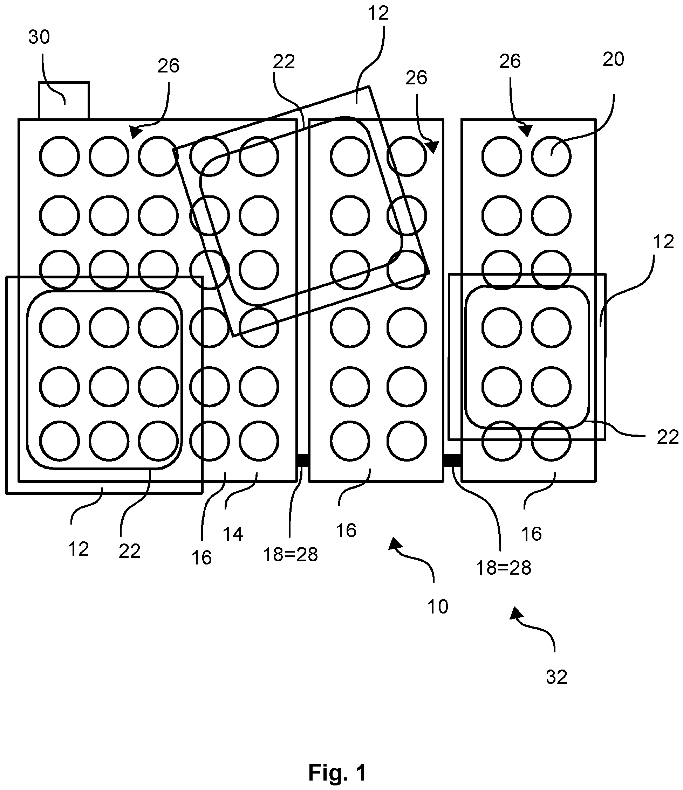

**Fig. 1** zeigt eine Energie-Sende- und Empfangseinheit **32,** umfassend ein Energieübertragungssystem **10** und mehrere, in Fig. 1 beispielhaft drei, Mobilgeräte **12.** Insbesondere sollen Energiespeicher der Mobilgeräte 12 mittels des Energieübertragungssystems 10 aufgeladen werden. Die Mobilgeräte 12 können beispielsweise akkubetriebene Bohrhämmer, Meißelmaschinen, Bohrmaschinen oder andere akkubetriebene Handwerkzeugmaschinen oder ein Akkublock für eine solche Handwerkzeugmaschine sein.

Das Energieübertragungssystem 10 weist ein Energieübertragungsmodul **14** sowie zwei weitere Sendeeinheiten **16** auf. Über Kommunikationsschnittstellen **18** sind die Sendeeinheiten 16 mit dem Energieübertragungsmodul 14 gekoppelt.
Das Energieübertragungsmodul 14 weist ebenfalls eine Sendeeinheit 16 auf. Seine Sendeeinheit 16 sowie die beiden anderen Sendeeinheiten 16 sind allesamt gleichartig aufgebaut.

Ferner weist das Energieübertragungsmodul 14 eine elektrische Energiequelle **30** auf. Die elektrische Energiequelle 30 ist insbesondere als Netzanschluss ausgebildet, sodass das Energieübertragungsmodul 14 und - wie noch weiter unten näher ausgeführt wird - damit auch die Energie-Sende- und Empfangseinheit 32 insgesamt mit Energie aus einem in Fig. 1 nicht dargestellten Stromnetz mit zum Betrieb erforderlicher elektrischer Energie versorgbar ist.

Die Kommunikationsschnittstellen 18 weisen elektrische Verbindungselemente, insbesondere Steckverbinder sowie komplementär ausgebildete Buchsen auf. Die Kommunikationsschnittstellen 18 bilden zugleich Energieversorgungsschnittstellen **28.** Somit können die Sendeeinheiten 16 über die Kommunikationsschnittstellen 18 bidirektional zum Betrieb wenigstens einer der Sendeeinheiten 16 notwendigen elektrischen Energie austauschen. Insbesondere kann über die Kommunikationsschnittstellen 18 jeweils ein Speisestrom fließen. Auf diese Weise werden die übrigen Sendeeinheiten 16 durch das Energieübertragungsmodul 14 und insbesondere dessen elektrischer Energiequelle 30 mit der zum Betrieb erforderlichen elektrischen Energie versorgt.

Zudem kann über die Kommunikationsschnittstellen 18 eine Information über eine Soll-Phasenlage vom Energieübertragungsmodul 14 zur jeweiligen Sendeeinheit 16 übertragen werden. Dazu sind die Kommunikationsschnittstelle 18 eingerichtet, mit jeweils gleichartigen Sendeeinheiten 16 zu kommunizieren. Insbesondere durch eine Phasenlage des Speisestroms kann eine jeweilige Soll-Phasenlage codiert sein. Beispielsweise kann eine Phasenlage des Speisestroms der jeweils einzustellenden bzw. zu erreichenden Soll-Phasenlage entsprechen.

Das Energieübertragungsmodul 14 sowie die Sendeeinheiten 16 weisen jeweils mehrere Sendespulen **20** auf, von denen zur Vereinfachung der Darstellung lediglich eine Sendespule 20 mit einem Bezugszeichen markiert ist. Die Sendespulen 20 sind jeweils im Energieübertragungsmodul 14 bzw. in den jeweiligen Sendeeinheiten 16 flächig, insbesondere matrixförmig, verteilt angeordnet. Sie bilden somit Energieübertragungsflächen **26** zur drahtlosen Energieübertragung zu den Mobilgeräten 12.

Die Mobilgeräte 12 sind insbesondere für eine elektromagnetische, insbesondere induktive, Ankopplung an das Energieübertragungssystem 10 eingerichtet. Die Mobilgeräte 12 weisen jeweils eine Empfangsspule **22** auf. Die Empfangsspulen 22 sind eingerichtet, von wenigstens einer der Sendespulen 20 abgestrahlte Energie zu empfangen, sofern sie sich in einem jeweiligen räumlichen Energieübertragungsbereich der jeweiligen Sendespule 20 befinden.

Die Sendeeinheiten 16 einschließlich der Sendeeinheit 16 des Energieübertragungsmoduls 14 sind nach demselben elektrotechnischen Grundprinzip verschaltet. Denkbar ist, dass sich die Anzahl der Sendespulen 20 der Sendeeinheiten 16 unterscheidet. So ist in Fig. 1 beispielhaft dargestellt, dass das die Sendeeinheit 16 des Energieübertragungsmoduls 14 mehr Sendespulen 20 aufweist als die übrigen Sendeeinheiten 16.

Die gemäß Fig. 1 in der Mitte angeordnete Sendeeinheit 16 weist beispielhaft zwei Kommunikationsschnittstellen 18 und damit zwei Energieversorgungsschnittstelle 28 auf, wohingegen das Energieversorgungsmodul 14 bzw. seine Sendeeinheit 16 sowie die in Fig. 1 rechts angeordnete Sendeeinheit 16 lediglich jeweils eine der Schnittstellen 18, 28 aufweisen.

Weitere Merkmale, beispielsweise die elektrotechnische Verschaltung der verschiedenen Komponenten, sind der oben genannten, durch Bezugnahme mit eingebundenen europäischen Patentanmeldung zu entnehmen.

Zu erkennen ist, dass die Mobilgeräte 12 auf dem Energieübertragungssystem 10, insbesondere zur Energieübertragung, frei platziert und frei ausgerichtet sind.

Auch ist zu erkennen, dass die Empfangsspulen 22 jeweils eine größere Fläche überspannen als jeweils eine der Sendespulen 20. Mit anderen Worten sind die Empfangsspulen 22 größer als die Sendespulen 20. Insbesondere sind die Empfangsspulen 22 größer als die jeweiligen räumlichen Energieübertragungsbereiche der jeweiligen Sendespulen 20. Beispielsweise überspannen das in Fig. 1 am weitesten links platzierte Mobilgerät 12 und insbesondere dessen Empfangsspule 22 neun Sendespulen 20.

Das Energieübertragungssystem 10 ist modular aufgebaut. Weitere Sendeeinheiten 16 (in Fig. 1 nicht dargestellt) und vorzugsweise weitere Energieübertragungsmodule (in Fig. 1 ebenfalls nicht dargestellt) lassen sich mittels der Kommunikationsschnittstelle 18 an das Energieübertragungsmodul 14 anschließen, sodass das Energieübertragungssystem 10 und insbesondere der Energieübertragungsbereich des Energieübertragungssystems 10 vergrößert werden. Auch können eine oder beide der übrigen Sendeeinheiten 16, insbesondere von der Kommunikationsschnittstelle 18, abgekoppelt werden, sodass das Energieübertragungssystem 10 und insbesondere sein Energieübertragungsbereich verkleinert werden.

Das Energieübertragungssystem 10, insbesondere sein Energieübertragungsmodul 14, weist - jeweils in Fig. 1 nicht dargestellt - eine programmierbare Steuereinheit mit einer Speichereinheit, in der Programmcode ausführbar abgelegt ist, und mit mittels Programmcode steuerbare, elektrische Schaltelemente auf. Die Steuereinheit ist insbesondere eingerichtet, die Sendespulen 20 gemäß dem erfindungsgemäßen Verfahren anzusteuern. Denkbar ist, dass alternativ oder ergänzend die Sendeeinheiten 16 jeweils entsprechend eingerichtete, eigene Steuereinheiten zur Steuerung ihrer jeweiligen Sendespulen 20 aufweisen.

Auch diesbezüglich finden sich weitere Merkmale in der durch Bezugnahme eingebundenen europäische Patentanmeldung.

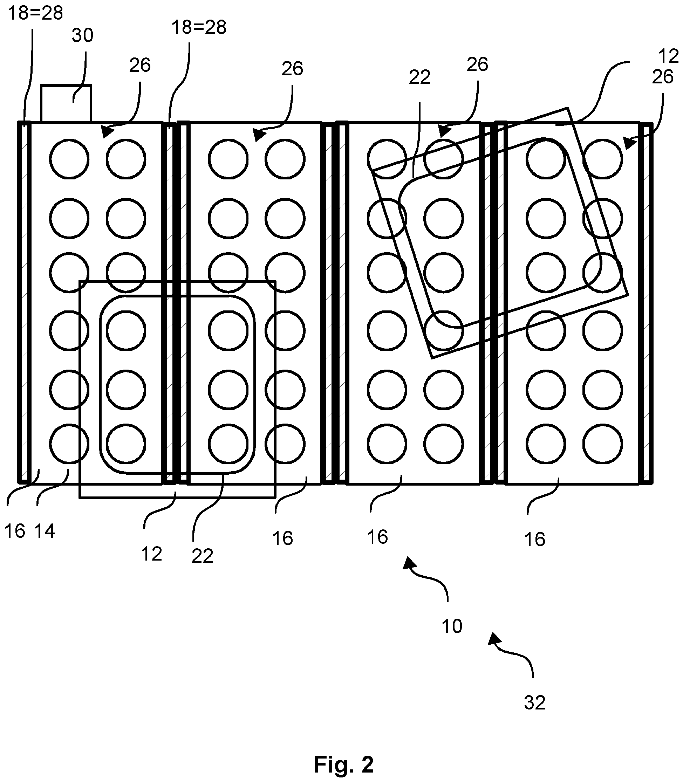

**Fig. 2** zeigt eine weitere Energiesende- und Empfangseinheit 32, die, soweit im Folgenden nicht anderweitig beschrieben, analog zu der im Fig. 1 abgebildeten und vorangehend beschriebenen Energiesende- und Empfangseinheit 32 ausgebildet ist, sodass im Folgenden vorrangig die Besonderheiten dieses Ausführungsbeispiels erläutert werden.

Die Energiesende- und Empfangseinheit 32 weist wiederum ein Energieübertragungssystem 10 mit einem Energieübertragungsmodul 14, das eine Sendeeinheit 16 und eine elektrische Energiequelle 30 aufweist, sowie mit mehreren weiteren Sendeeinheiten 16 sowie hier beispielhaft zwei Mobilgeräten 12 auf.

Eine der Besonderheiten besteht darin, dass alle Sendeeinheiten 16, vorzugsweise einschließlich der Sendeeinheit 16 des Energieübertragungsmoduls 14, jeweils wenigstens zwei Kommunikationsschnittstellen 18 aufweisen. Die Kommunikationsschnittstellen 18 sind wiederum zugleich Energieversorgungsschnittstellen 28. Dabei sind in Fig.2 zur Vereinfachung der Darstellung stellvertretend lediglich die beiden Kommunikationsschnittstelle 18 und die beiden Energieversorgungssschnittstellen 28 der in Fig. 2 am weitesten links angeordneten Sendeeinheit 16, d. h. der Sendeeinheit 16 des Energieversorgungsmoduls 14, mit Bezugszeichen versehen.

Die Kommunikationsschnittstellen 18 und bevorzugt auch die Energieversorgungsschnittstellen 28 sind drahtlos, insbesondere als induktive Schnittstellen, ausgebildet. Vorzugsweise sind die Kommunikationsschnittstellen 18 deutlich schmaler als die Energieübertragungsflächen 26 der jeweiligen Sendeeinheiten 16.

Sie sind jeweils an zwei Längsseiten der Sendeeinheiten 16 ausgebildet. Zusätzlich sind sie, zumindest teilweise, permanentmagnetisch. Somit lassen sich jeweils zwei Sendeeinheiten 16 kraftschlüssig durch gegenseitige Annäherung miteinander verbinden. Aufgrund einer gegenseitigen magnetischen Anziehung der Sendeeinheiten 16 können sich diese zudem selbsttätig entlang ihren jeweiligen Längsseiten zueinander ausrichten und positionieren.

Aufgrund der induktiven Übertragung von Informationen und der zum Betrieb der Sendeeinheiten 16 notwendigen Energie erübrigt sich ein manuelles Anstecken bzw. Anschließen einer Sendeeinheit 16 an einer anderen.

Somit lässt sich das Energieübertragungssystem 10 und damit seine Gesamtenergieübertragungsfläche durch einfache seitliche Aneinanderreihung von Sendeeinheiten 16 bedarfsgerecht, insbesondere modular, anpassen.

## Patentansprüche

1. **Sendeeinheit** (16) zur Energieübertragung zu einem Mobilgerät (12) zur Versorgung des Mobilgeräts (12), insbesondere einer Handwerkzeugmaschine, mit zum Betrieb des Mobilgeräts (12) erforderlicher Energie, wobei die Energieübertragung drahtlos erfolgt, umfassend
- eine Energieübertragungsfläche (26) zur drahtlosen Energieübertragung zu dem Mobilgerät (12), und
- eine Kommunikationsschnittstelle (18), die eingerichtet ist, mit einer weiteren, gleichartigen Sendeeinheit (16) zu kommunizieren.

2. Sendeeinheit nach dem vorhergehenden Anspruch, **dadurch gekennzeichnet, dass** die Sendeeinheit (16) eine Energieversorgungsschnittstelle (28) oder mehrere Energieversorgungsschnittstellen (28) zum uni- oder bidirektionalen Austausch der zum Betrieb wenigstens einer der Sendeeinheiten (16) notwendigen elektrischen Energie mit der weiteren Sendeeinheit (16) aufweist.

3. Sendeeinheit nach dem vorhergehenden Anspruch, **dadurch gekennzeichnet, dass** die Sendeeinheit (16) wenigstens zwei Energieversorgungsschnittstellen (28) aufweist.

4. Sendeeinheit nach dem vorhergehenden Anspruch, **dadurch gekennzeichnet, dass** die Kommunikationsschnittstelle (18) wenigstens eine der Energieversorgungsschnittstellen (28) bildet.

5. Sendeeinheit nach einem der vorhergehenden Ansprüche, **dadurch gekennzeichnet, dass** die Kommunikationsschnittstelle (18) als drahtlose Schnittstelle eingerichtet ist.

6. Sendeeinheit nach einem der vorhergehenden Ansprüche, **dadurch gekennzeichnet, dass** die Kommunikationsschnittstelle (18) eingerichtet ist, wenigstens eine Information über eine Soll-Phasenlage des in einer Sendespule (20) der Sendeeinheit (16) fließenden Stroms oder über einen relativen Soll-Phasenwinkel übertragbar ist.

7. Sendeeinheit nach einem der vorhergehenden Ansprüche, **dadurch gekennzeichnet, dass** die Sendeeinheit (16) mit der weiteren Sendeeinheit (16) kraft- und/oder formschlüssig verbindbar ist.

8. **Energieübertragungsmodul** (14) zur Energieübertragung zu einem Mobilgerät (12) zur Versorgung mit zum Betrieb des Mobilgeräts (12) erforderlicher Energie, insbesondere einer Handwerkzeugmaschine, wobei die Energieübertragung drahtlos erfolgt, umfassend
- eine Sendeeinheit (16) nach einem der vorhergehenden Ansprüche und
- eine elektrische Energiequelle (30).

9. **Energieübertragungssystem** (10), umfassend ein Energieübertragungsmodul (14) nach Anspruch 8 und eine Sendeeinheit (16) nach einem der Ansprüche 1 bis 7.

10. **Energie-Sende- und Empfangseinheit** (32) umfassend eine Sendeeinheit (16) nach einem der Ansprüche 1 bis 7 und ein Mobilgerät (12), das eingerichtet ist, Energie drahtlos von der Sendeeinheit (16) zu empfangen.

11. Energie-Sende- und Empfangseinheit nach dem vorhergehenden Anspruch, **dadurch gekennzeichnet, dass** die Sendeeinheit (16) wenigstens zwei Sendespulen (20) und das Mobilgerät (12) wenigstens eine Empfangsspule (22) aufweisen, wobei die Empfangsspule (22) größer ist als wenigstens eine der Sendespulen (20).
